# EUROPEAN PATENT APPLICATION

(11) **EP 4 502 416 A1**
(43) Date of publication of application: **05.02.2025**
(21) Application number: 23213092.2
(22) Date of filing: 29.11.2023
(51) Int. Cl.: F16G 15/04

(54) **A CHAIN CONNECTING LINK**

(30) Priority: 02.08.2023 AU 2023902447
(71) Applicant: Wang, Shang, Hornsby, NSW 2077 (AU)
(72) Inventor: Wang, Shang, Hornsby, NSW 2077 (AU)
(74) Representative: IK-IP LTD

(57) **Abstract**

A chain connecting link including: two link halves, each link half including a series of aligned holes; a cylindrical pin which is arranged to fit inside the holes of the link halves; the pin includes a narrowed region; a retaining piece formed from an elastomeric material; the retaining piece includes an aperture which locates about the narrowed region of the pin to retain the pin in place.

## Description

### Technical Field

The present invention relates to chain connecting links and particularly relates to reusable chain connecting links.

### Background to the Invention

In the field of lifting and rigging, when it is desired to join lengths of chain, or to join chains or hooks to other items, a type of chain connecting link known as a hammer lock is often employed.

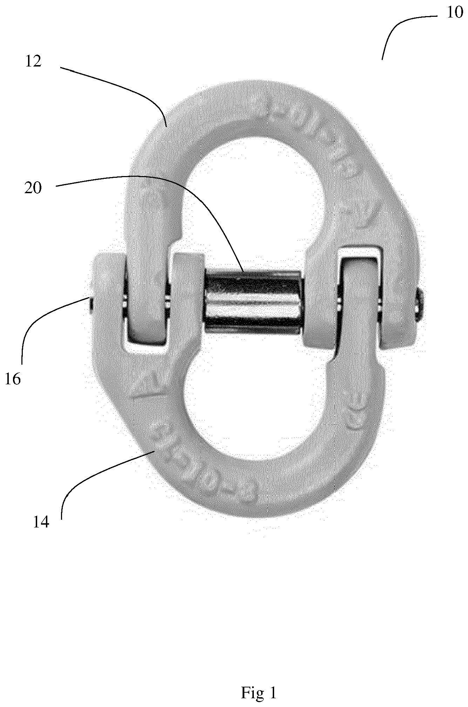

Referring to figures 1 to 3 an example of a prior art hammer lock link 10 is shown which includes two forged steel link halves 12, 14, a cylindrical steel pin 16, a metal tube 20 and a metal coil spring 30 which is retained inside the tube 20 by way of a circlip 32. The pin 16 has a narrowed cylindrical portion 18.

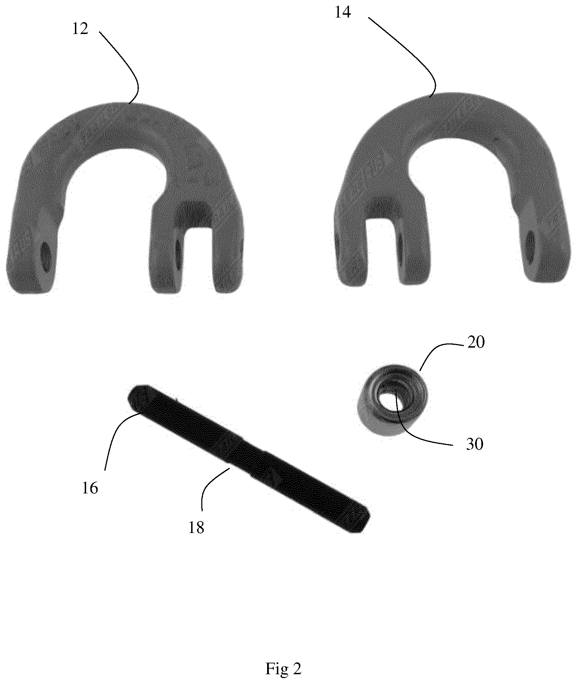

The method of using the link 10 to join items together commences with the link in its disassembled state as shown in figure 2. The two halves 12, 14 are inserted into the items they are to join (such as two chains) and then the halves are brought together to align the series of holes provided in the two halves. The pin 16 is then inserted part-way through the holes whilst the combination of the tube 20 and the spring 30 is held between the halves.

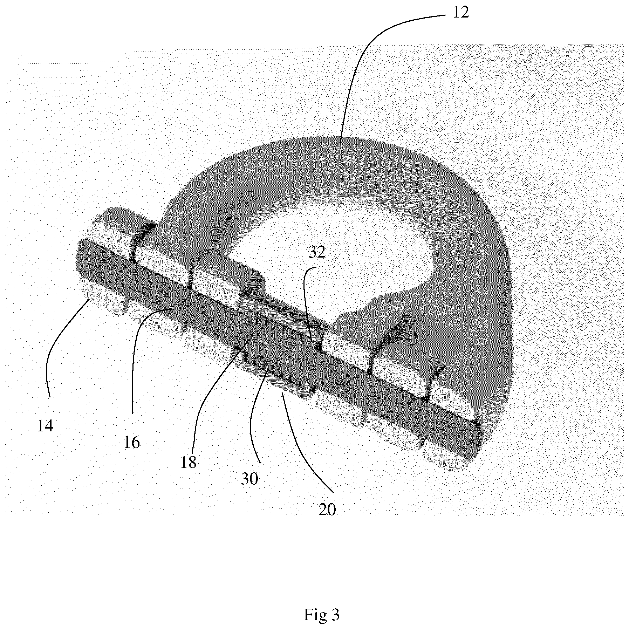

Pin 16 is then driven with a hammer (not shown) to force the pin through the spring 30 inside the tube 20 until the pin 16 is centrally positioned within the link 10 as shown in figure 3. In order for the pin 16 to pass through the spring 30 the spring is forced to expand in diameter. Then, when the spring becomes aligned with the narrowed region 18 the spring contracts to become seated around the narrowed region 18 as best seen at figure 3. The narrowed region 18 transitions to the larger diameter region of the pin at shoulders at each end of the narrowed region. The shoulders resist movement of the spring out of the narrowed region of pin 16 to prevent the pin 16 from coming loose from the link.

If at some later time it is desired to separate the link, then to do this a hammer and drift is used to drive the pin 16 out from engagement with the spring 30 to remove the pin and disassemble the link. The spring 30 remains inside tube 20 and can be reassembled again.

The pin 16 is a very tight fit within the spring 30 and usually several hard blows of the hammer are required to assemble or disassemble the link. It is not uncommon for the pin 16 to become bent during the process of assembling the link.

Often, the link will be located in an inaccessible location. Such as, for example, underneath the rear of a vehicle when used in an arrangement with a vehicle as a safety hitch for a trailer. With the link situated in a position like this, rather than on a workbench, it can become very difficult to use the hammer to strike clean blows with enough force to assemble or disassemble the lock.

There remains a need for improved links to join chains and other items of rigging.

### Summary of the Invention

In a first aspect the present invention provides a chain connecting link including: two link halves, each link half including a series of aligned holes; a cylindrical pin which is arranged to fit inside the holes of the link halves; the pin includes a narrowed region; a retaining piece formed from an elastomeric material; the retaining piece includes an aperture which locates about the narrowed region of the pin to retain the pin in place.

The narrowed region may be of constant diameter.

The narrowed region may include shoulders at each end where it transitions to the diameter of the pin.

The link may further include a metal sleeve which surrounds the elastomeric retaining piece.

The elastomeric retaining piece may be cylindrical.

### Brief Description of the Drawings

An embodiment of the present invention will now be described, by way of example only, with reference to the accompanying drawings, in which:
Figure 1 is a front view of an assembled prior art chain connecting link;
Figure 2 shows the link of figure 1 in a disassembled state;
Figure 3 is a cross sectional view through the centre of the pin of figure 1; and
Figure 4 is a cross sectional view of a chain connecting link according to an embodiment of the invention.

### Detailed Description of the Preferred Embodiment

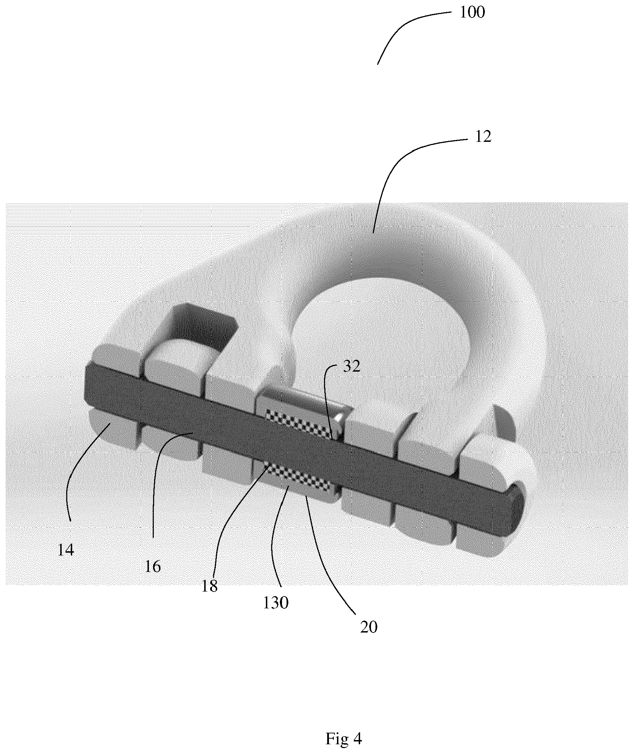

Referring to figure 4 a chain connection link 100 is shown. Many of the components are identical in construction to the connecting link 10 described above and have been given like reference numerals. Where link 100 differs is that there is no coil spring. In place of a coil spring is a retaining piece being a cylinder 130 formed from an elastomeric material such as rubber or silicone rubber.

The cylinder 130 is dimensioned so that it's internal diameter is smaller than the diameter of the narrowed potion 18 of pin 16. The hardness of the elastomer is selected so that the pin is a reasonably hard push fit into the cylinder 130.

In order to assemble the link 100, the procedure is similar to that described above, except that the pin 16 can be pushed by hand into the assembly to complete the link. A hammer is not required to assemble the link. Once assembled, the elastomeric cylinder 18 constricts around the narrowed portion. The shoulders that form the transition to the larger diameter of the pin 16 at either end of the narrowed region 18 prevent movement of the pin and retain the link in its assembled state.

In order to disassemble the link, a slim tool with a diameter smaller than the diameter of the narrowed region 18 of pin 16 is used to push on one end of the pin. This forces the pin 16 out of engagement with the cylinder 130 and the pin 16 is pushed out of the link to allow the link to be disassembled. Again, a hammer is not required to disassemble the link.

Links 100 according to the invention can be assembled by hand and disassembled using a pushing tool without the need for use of a hammer. The risk of bending the pin is completely avoided.

Furthermore, when used in hard to reach locations, such as underneath a vehicle, the link can still be readily assembled and disassembled without difficulty.

At the same time, links according to the invention are securely assembled and will remain safely in an assembled state until deliberately removed by a user.

Embodiments of the invention can be provided in various sizes to suit particular sizes of chains and fittings.

Any reference to prior art contained herein is not to be taken as an admission that the information is common general knowledge, unless otherwise indicated.

Finally, it is to be appreciated that various alterations or additions may be made to the parts previously described without departing from the spirit or ambit of the present invention.

## Claims

1. A chain connecting link including:
two link halves, each link half including a series of aligned holes;
a cylindrical pin which is arranged to fit inside the holes of the link halves;
the pin includes a narrowed region;
a retaining piece formed from an elastomeric material;
the retaining piece includes an aperture which locates about the narrowed region of the pin to retain the pin in place.

2. A chain connecting link according to claim 1 wherein the narrowed region is of constant diameter.

3. A chain connecting link according to any preceding claim wherein the narrowed region includes shoulders at each end where it transitions to the diameter of the pin.

4. A chain connecting link according to any preceding claim further including a metal sleeve which surrounds the elastomeric retaining piece.

5. A chain connecting link according to any preceding claim wherein the elastomeric retaining piece is cylindrical.
